# EUROPÄISCHE PATENTSCHRIFT

(11) **EP 1 459 884 B1**
(45) Veröffentlichungstag und Bekanntmachung des Hinweises auf die Patenterteilung: **22.11.2006**
(21) Anmeldenummer: 04004771.4
(22) Anmeldetag: 02.03.2004
(51) Int. Cl.: B32B 27/12, B32B 7/02, E04B 1/68

(54) **Dichtungsband und Verfahren zur Herstellung desselben**
Sealing strip and method for making
Bande d'étanchéité et méthode de fabrication

(30) Priorität: 20.03.2003 DE 20304511 U; 08.08.2003 DE 20312341 U
(43) Veröffentlichungstag der Anmeldung: 22.09.2004
(73) Patentinhaber: Blowitex Vliesstoffe International GmbH, 53639 Königswinter (DE)
(72) Erfinder: Wirz, Peter, 53721 Siegburg (DE)
(74) Vertreter: Müller-Gerbes, Margot

(56) Entgegenhaltungen:
- DE-U- 20 206 254
- DE-U- 20 215 528
- DE-U- 20 216 955

## Beschreibung

Die Erfindung betrifft ein Dichtungsband zum Abdichten einer Fuge zwischen einem in ein Bauwerk eingesetzten Rahmen und dem Bauwerk, wobei das Dichtungsband zwei parallel zueinander verlaufende und aneinander angrenzende streifenförmige Bahnen umfaßt und die erste streifenförmige Bahn dampfdiffusionsoffen und flüssigkeitsdicht und die zweite streifenförmige Bahn dampfdiffusionsdicht und flüssigkeitsdicht ausgebildet ist.

Die Abdichtung von Bauanschlüssen ist zwingend erforderlich, um Anschlußfugen zwischen in Bauwerke eingesetzten Bauteilen, wie Fensterrahmen, Türrahmen etc. und dem Bauwerk vor der direkten Witterung zu schützen. Es ist bekannt, die Anschlußfugen z.B. zwischen einem Fenster und dem Bauwerk mit einer Anschlußfolie abzudichten, wobei diese Anschlußfolie mit Dichtungsbändern und Leisten am Fensterrahmen und am Bauwerk fest angebracht wird. Bei derartigen Folienanschlüssen sind auch die bauphysikalischen Grundsätze der Dampfdiffusion zu beachten. Häufig werden auch Dichtungsbänder benutzt, um die Fugen zwischen zwei Bauteilen abzudichten, wobei die Dichtungsbänder aus Gummi, Moosgummi oder mit Wasser abweisenden Mitteln getränktem Schaumgummimaterial bestehen, die oft in vorkomprimierter Form eingesetzt werden.

Zum Stand der Technik wird beispielhaft auf die EP 0 530 653 A1, DE 297 15 660 U1, DE 296 05 456 U1 und DE 298 07 620 U1 verwiesen.

Die hieraus bekannten Dichtungsbänder bestehen entweder im wesentlichen aus Butylkautschuk bzw. weisen mindestens einen aus Butylkautschuk bestehenden Bereich auf, was den Nachteil einer geringen Elastizität in Längserstreckung mit sich bringt. Die genannten Dichtungsbänder sind darüber hinaus entweder durchgängig dampfdiffusionsoffen und flüssigkeitsdicht ausgebildet, um eine dampfdiffusionsoffene Abdichtung der jeweiligen Fuge zu erzielen oder aber sie sind dampfdiffusionsdicht und flüssigkeitsdicht ausgebildet, um eine entsprechende dampfdiffusionsdichte und flüssigkeitsdichte Abdichtung der Fuge zu erreichen. Dies ist jedoch im Hinblick auf die heutigen Anforderungen an eine Abdichtung im Anschlußfugenbereich, z.B. zwischen einem Rahmen und dem Bauwerk nicht immer zufriedenstellend. Während nämlich zur Außenseite des Bauwerks hin eine dampfdiffusionsoffene und flüssigkeitsdichte Abdichtung der Fuge von Vorteil ist, ist zur Innenseite, d.h. Raumseite des Bauwerks hin, eine dampfdiffusionsdichte und flüssigkeitsdichte Abdichtung der Anschlußfuge bevorzugt.

Ein gattungsgemäßes Dichtungsband, welches diesem Erfordernis Rechnung trägt und aus zwei streifenförmigen Bahnen besteht, von denen eine dampfdiffusionsoffen und flüssigkeitsdicht ausgebildet und die zweite dampfdiffusionsdicht und flüssigkeitsdicht ausgebildet ist, ist aus der DE 202 15 528 U2 bekannt. Hierbei werden die beiden streifenförmigen Bahnen entlang eines Längsrandes derselben überlappend aufeinandergelegt und mittels einer Extrusionsschweißnaht miteinander verbunden, so daß insgesamt ein Dichtungsband entsteht, welches in seiner Längserstreckung gesehen hälftig dampfdiffusionsoffen und hälftig dampfdiffusionsdicht sowie stets flüssigkeitsdicht ausgebildet ist. Nachteil dieses bekannten Dichtungsbandes ist es, daß die Verbindung der beiden unterschiedlichen streifenförmigen Bahnen mittels einer Extrusionsschweißnaht hohen apparativen Aufwand erfordert, der einer möglichst wirtschaftlichen Herstellung des Dichtungsbandes entgegensteht.

Aufgabe der Erfindung ist es, ein Dichtungsband der eingangs genannten Art vorzuschlagen, welches auf einfache Weise kostengünstig herstellbar ist.

Zur Lösung der gestellten Aufgabe wird erfindungsgemäß vorgeschlagen, daß das Dichtungsband einen sich vollflächig über die erste und die zweite Bahn erstreckenden Verbund aus einer dampfdiffusionsoffenen und flüssigkeitsdichten Trägerbahn auf Polymerbasis sowie einer auf die Trägerbahn aufkaschierten dampfdiffusionsoffenen und flüssigkeitsdichten Membranfolie umfaßt und im Bereich der zweiten streifenförmigen Bahn auf die Membranfolie eine dampfdiffusionsdichte und flüssigkeitsdichte Sperrfolie aufgebracht ist.

Ein Verfahren zum Herstellen dieses erfindungsgemäßen Dichtungsbandes ist im Patentanspruch 17 angegeben.

Die erfindungsgemäße Lösung einer möglichst einfachen Herstellung des Dichtungsbandes besteht demnach darin, zunächst einen dampfdiffusionsoffenen und flüssigkeitsdichten Verbund aus zwei Schichten vorzusehen, der sich über das gesamte Dichtungsband erstreckt und mithin bereits die erste, nämlich flüssigkeitsdichte und dampfdiffusionsoffene streifenförmige Bahn bildet. Die demgegenüber unterschiedliche zweite streifenförmige Bahn, welche dampfdiffusionsdicht und flüssigkeitsdicht ausgebildet sein soll, wird sodann dadurch hergestellt, daß im gewünschten Ausdehnungsbereich der zweiten Bahn auf den vorgenannten dampfdiffusionsoffenen und flüssigkeitsdichten Verbund zusätzlich eine weitere Schicht in Form einer dampfdiffusionsdichten und flüssigkeitsdichten Sperrfolie aufgebracht wird, welche einerseits die zweite streifenförmige Bahn in ihrer Ausdehnung definiert und darüber hinaus dieser die gewünschte Dampfdiffusionsdichtheit und Flüssigkeitsdichtheit verleiht.

Demzufolge ist es zur Herstellung des erfindungsgemäßen Dichtungsbandes lediglich erforderlich, zunächst großflächig einen zweischichtigen Verbund aus der Trägerbahn und der Membranfolie z.B. in einer so genannten Flachbettkaschiereinrichtung herzustellen und in den gewünschten Bereichen zusätzlich in den Abmessungen der zweiten streifenförmigen Bahn entsprechende Streifen der dampfdiffusionsdichten und flüssigkeitsdichten Sperrfolie zuzuführen und gleichzeitig mit der Trägerbahn und der Membranfolie in der beispielhaft genannten Flachbettkaschieranlage zu verbinden, wodurch gleichzeitig die erste und die zweite Bahn des Dichtungsbandes ausgebildet werden.

Insbesondere ist es möglich, mehrere voneinander beabstandete Streifen der Sperrfolie auf den Verbund aus der Trägerbahn und der Membranfolie aufzubringen und nachfolgend das solchermaßen erhaltene Vorprodukt aus wechselweise zweischichtig, nämlich dampfdiffusionsoffenen Bereichen und dreischichtig, nämlich dampfdiffusionsdichten Bereichen bestehende Vorprodukt in einzelne Dichtungsbänder gemäß der vorliegenden Erfindung zu zerschneiden, wodurch eine hochrationelle Fertigung ermöglicht ist. Die einzelnen Streifen der Sperrfolie werden hierzu in einem der Breite der auszubildenden ersten streifenförmigen Bahn entsprechenden Abstand voneinander auf den Verbund aufgelegt.

Gemäß einem Vorschlag der Erfindung wird die Trägerbahn von einem Vlies auf Basis von Polypropylen, Polyethylen oder eines Polyesters mit einem Flächengewicht von 20 bis 150 g/m² gebildet.

Als Vlies im erfindungsgemäßen Sinne zur Ausbildung der Trägerbahn kommen sowohl eine Vliesbahn aus schmelzgeblasenen Mikrofasern nach dem so genannten Meltblown-Verfahren wie auch Spinnvliese aus Endlosfilamenten in Frage.

Da die erfindungsgemäßen Dichtungsbänder nach ihrem Einbau zur Abdichtung einer Fuge üblicherweise eingeputzt werden, d.h. mit dem zum Verputzen des Gebäudes verwendeten Putz überzogen werden, kann zur Verbesserung der Putzhaftung auf der Oberfläche der Trägerbahn aus einem Vlies bevorzugt vorgesehen werden, daß das Vlies perforiert ist. Die Perforationen werden hierbei in einem gewissen Lochabstand der einzelnen Perforationen angeordnet und verleihen insgesamt der Oberfläche der Trägerbahn aus einem Vlies eine höhere Rauhigkeit, was letztlich zu gewünschten verbesserten Putzhaftung führt, da sich die Putzschicht auf der rauheren Oberfläche besser verkrallen kann.

Zur Ausbildung dieser Perforationen, die dem als Trägerbahn eingesetzten Vlies die gewünschte rauhere Oberfläche verleihen, können verschiedene Verfahren eingesetzt werden.

Nach einem Vorschlag der Erfindung ist das Vlies mittels Nadelung perforiert, wobei die einzelnen Perforationen in regelmäßiger oder unregelmäßiger Anordnung in dem Vlies ausgebildet sind und einen Durchmesser von je 0,5 bis 5 mm aufweisen. Die Nadelung selber erfolgt in an sich bekannter Weise, indem Nadeln, die beispielsweise auf einer Nadelwalze oder einem Nadelbalken angeordnet sind, durch das Vlies hindurch treten und hierbei Perforationen bzw. Löcher ausbilden, die sodann zu der gewünschten rauheren Oberfläche des Vlieses führen, so daß es als Trägerbahn im erfindungsgemäßen Sinne einsetzbar ist. Die Nadeln können hierbei wahlweise und den Anforderungen entsprechend beheizt oder unbeheizt ausgeführt sein, was üblicherweise mit Heiß- bzw. Kaltvernadelung bezeichnet wird. Der jeweilige Durchmesser der einzelnen Perforationen von etwa 0,5 bis 5 mm wird durch Auswahl von entsprechenden Nadeln mit solchem Durchmesser bedingt.

Darüber hinaus ist es jedoch auch möglich, in ebenfalls an sich bekannter Weise das Vlies mittels Wasserstrahlen zu perforieren, was üblicherweise als Wasserstrahlvernadelung oder Wasserstrahlverfestigung bezeichnet wird. Zu diesem Zweck kann beispielsweise eine in der EP 1 238 133 B1 beschriebene Vorrichtung verwendet werden, bei welcher das Vlies mit feinsten Wasserstrahlen beaufschlagt wird, die aufgrund ihres hohen Förderdruckes durch das Vlies hindurch treten und bei diesem Hindurchtritt die gewünschten Löcher oder Perforationen im Vlies ausbilden. Hierbei sind Durchmesser der einzelnen Perforationen von etwa 0,1 bis 2 mm angestrebt, die dem solchermaßen behandelten Vlies die erforderliche Oberflächenrauhigkeit für die gute Putzhaftung verleihen.

Bei beiden vorgenannten Anwendungen, Vernadelung mechanisch mittels Nadeln oder hydraulisch mittels Wasserstrahlen können die jeweiligen Perforationen sowohl in regelmäßigem als auch unregelmäßigem Muster bzw. entsprechender Anordnung auf dem Vlies ausgebildet werden.

In beiden Fällen können ferner die einzelnen Perforationen im Vlies einen Abstand untereinander von etwa 1 bis 10 mm aufweisen.

Alternativ kann die Trägerbahn auch von einer dreidimensional geprägten und gelochten Folie auf Basis von Polypropylen, Polyethylen oder eines Polyesters in einer Dicke von 30 bis 80 µm gebildet werden, wobei durch die Prägung konusförmige Trichter ausgebildet werden, die an ihrem verjüngten Ende ein Loch aufweisen und eine mit Löchern versehene Oberfläche bilden, welche auf der der aufkaschierten Membranfolie abgewandten Seite der Trägerbahn ausgebildet ist. Diese als Trägerbahn dienende dreidimensional geprägte und gelochte Folie verleiht aufgrund der Orientierung der Oberfläche, auf der die Löcher sich befinden, wegen ihrer Rauhigkeit dem erfindungsgemäßen Dichtungsband eine besonders gute Verankerbarkeit an Putz und Mauerwerk.

Die vorangehend beschriebene und als Trägerbahn für das Dichtungsband verwendete geprägte und gelochte Folie, beispielsweise aus Polyethylen oder Polypropylen oder eines Polyesters ist mit Mikrolöchern versehen, so daß sie dampfdurchlässig ist, aber gleichzeitig flüssigkeitsundurchlässig bleibt. Die Prägung ist bevorzugt rastermäßig ausgeführt, so daß die konusförmigen Trichter im Raster angeordnet sind und die Oberfläche, auf der Löcher der Trichter sich befinden, stark strukturiert ist und gute Haftungs- und Verkrallungseigenschaften zu Putz und Mauerwerk aufweist. Demgegenüber ist die gegenüberliegende Oberfläche der geprägten Folie glatter ausgebildet, wodurch sich eine gute Kaschierbarkeit mit der dort oberflächlich aufkaschierten Membranfolie ergibt. Die ausgeführten Löcher können auch sechseckig, rechteckig oder fünfeckig ausgebildet sein, bevorzugt mit Lochdurchmessern zwischen 125 bis 1.000 µm und einer Lochdichte von 14 bis 640 Löchern/cm². Bevorzugt wird eine dreidimensional geprägte und gelochte Folie aus Polyolefinen eingesetzt, bei der die Prägung und Lochung mittels Vakuum erfolgt, wie beispielsweise in der WO 96/13979 beschrieben.

Die Membranfolie des erfindungsgemäßen Dichtungsbandes ist bevorzugt auf Basis von Polypropylen, Polyethylen oder eines Polyesters in einer Dicke von 20 bis 30 µm und eines Flächengewichts von 20 bis 40 g/m² gebildet und ist gegenüber Dampfdiffusion durchlässig, jedoch flüssigkeitsdicht.

Es kann sich bei der Membranfolie sowohl um eine kompakte Folie wie auch um eine dünne und damit folienartige Vliesschicht handeln, welche jedoch in jedem Falle die geforderte Dampfdiffusionsoffenheit bei gleichzeitiger Flüssigkeitsdichtigkeit aufweist.

Die für die Ausbildung der zweiten streifenförmigen Bahn zusätzlich auf die Membranfolie aufgebrachte Sperrfolie ist gemäß einem Vorschlag der Erfindung ebenfalls auf Basis von Polypropylen, Polyethylen oder eines Polyesters in einer Dicke von 18 bis 20 µm ausgebildet und erhält ihre dampfdiffusionsdichte und flüssigkeitsdichte Eigenschaft durch eine Metallbedampfung auf der der Membranfolie abgewandten Seite.

Alternativ kann die Sperrfolie auch von einer Aluminiumdünnfolie gebildet werden, die unmittelbar mit der Membranfolie oder ggf. unter Zuhilfenahme von zuvor aufgestreuten Haftvermittlern mit der Membranfolie durch Kaschieren verbunden wird.

Auch kompakte und flüssigkeitsdichte Polyolefinfolien, z.B. aus Polyethylen oder Polypropylen oder auch eine entsprechende Polyesterfolie können als Sperrfolie verwendet werden.

Die Trägerbahn, die Membranfolie und die Sperrfolie sind bevorzugt, soweit sie auf Basis thermoplastischer Kunststoffe ausgebildet sind, aus gleichen oder miteinander kompatiblen und durch Kaschieren oder Laminieren haftfest miteinander verbindbaren Kunststoffen ausgebildet, so daß einerseits ein haftfester Verbund durch Kaschieren einfach ausgeführt und andererseits auch eine gute Recyclebarkeit gewährleistet wird.

Zur Anwendung des erfindungsgemäßen Dichtungsbandes beispielsweise zur Abdichtung einer Fuge zwischen einem Fensterrahmen und einem Bauwerk kann das Dichtungsband vorteilhaft entlang der Grenzlinie zwischen der ersten und der zweiten Bahn eine Haftkleberschicht für eine Verklebung des Dichtungsbandes am Bauteil, d.h. zum Beispiel dem Fensterrahmen aufweisen, die bei Nichtgebrauch mit einem abziehbaren Abdeckband abgedeckt ist, welches erst kurz vor der Montage von der Haftkleberschicht abgezogen wird.

Die Haftkleberschicht ist bevorzugt auf der der Sperrfolie abgewandten Oberfläche des Dichtungsbandes aufgebracht, kann jedoch selbstverständlich auch auf der anderen Seite des erfindungsgemäßen Dichtungsbandes angeordnet werden, dient jedoch in jedem Falle zur Verklebung des Dichtungsbandes mit dem Bauteil, beispielsweise dem Fensterrahmen.

Die der Grenzlinie zwischen der ersten und zweiten Bahn entfernt liegenden Längsseitenränder des Dichtungsbandes können am Bauwerk in geeigneter Weise, z.B. mittels aufsprühbarer Haftkleber, wie sie aus dem Stand der Technik bekannt sind, befestigt werden, wodurch die gewünschte Abdichtung der Fuge zwischen dem Bauteil, z.B. dem Fensterrahmen und dem Bauwerk bewirkt ist. Hierbei muß lediglich darauf geachtet werden, daß beim Ankleben der entlang der Grenzlinie zwischen der ersten und der zweiten Bahn angeordneten Haftkleberschicht am Bauteil, wie Fensterrahmen, die Orientierung des Dichtungsbandes in der Weise vorgenommen wird, daß die dampfdiffusionsoffene und flüssigkeitsdicht ausgebildete erste streifenförmige Bahn zur Außenseite des Bauwerks hin orientiert und mit ihrer freien, d.h. der Grenzlinie zwischen der ersten und zweiten Bahn abgewandten Längsseite am Bauwerk befestigt wird, während die zweite dampfdiffusionsdichte und flüssigkeitsdichte streifenförmige Bahn zur Innenseite des Bauwerks hin orientiert und mit ihrer freien Längsseite am Bauwerk befestigt wird.

Zur Erzielung einer unabhängig von den Außentemperaturen und damit ganzjährig möglichen Verarbeitung des erfindungsgemäßen Dichtungsbandes wird vorgeschlagen, daß für die Haftkleberschicht ein Haftkleber mit einem Anwendungstemperaturbereich von -30°C bis +80°C oder höher eingesetzt wird. Dieser Anwendungstemperaturbereich wird z.B. von Haftklebern auf Basis eines Synthesekautschuks in Form eines Hot-Melts oder auf Basis einer Acrylatdispersion geboten.

Weitere Ausgestaltungen und Einzelheiten der Erfindung werden nachfolgend anhand der ein Ausführungsbeispiel zeigenden Zeichnungen näher erläutert. Es zeigen:
- Figur 1: in perspektivischer Darstellung ein erfindungsgemäßes Dichtungsband,
- Figur 2: in vergrößerter Darstellung einen Schnitt durch das Dichtungsband entlang der Grenzlinie G in Figur 1,
- Figur 3: in schematisierter und nochmals vergrößerter Darstellung den Querschnitt durch eine Ausführungsform einer Trägerbahn,
- Figur 4: schematisch die Herstellung des erfindungsgemäßen Dichtungsbandes,
- Figur 5: schematisch die Aufsicht auf das Dichtungsband gem. Pfeil V in Figur 4.

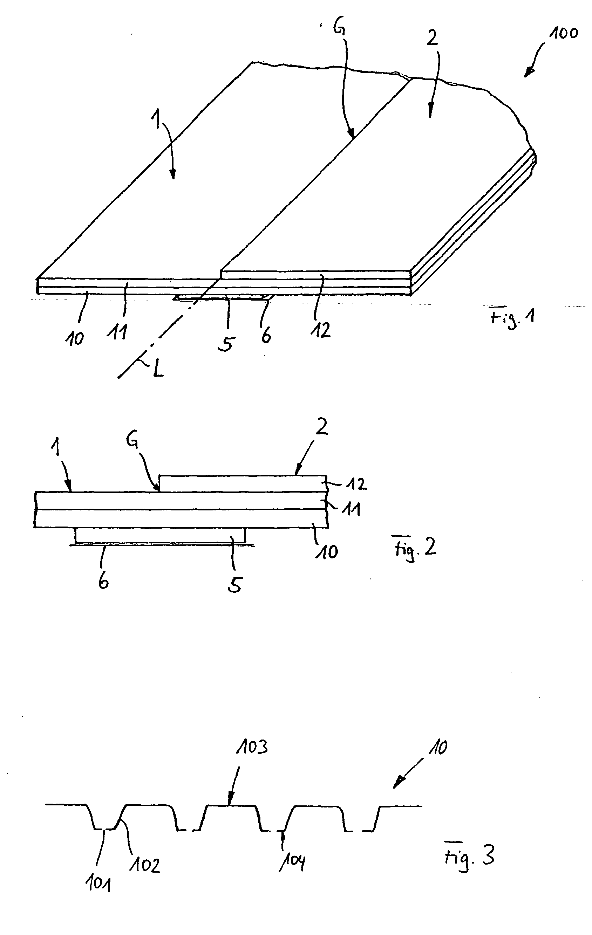

In der Figur 1 ist in einer schematisierten perspektivischen Darstellung ein Dichtungsband 100 zum Abdichten einer Fuge zwischen einem in ein Bauwerk eingesetzten Rahmen und dem Bauwerk dargestellt.

Das Dichtungsband 100 ist entlang seiner mit Bezugszeichen L gekennzeichneten Längsachse in zwei streifenförmige Bahnen 1, 2 unterteilt, die unmittelbar aneinander angrenzen und parallel zueinander entlang der Längsachse L verlaufen. Die zwischen der ersten streifenförmigen Bahn 1 und der zweiten streifenförmigen Bahn 2 ausgebildete Grenzlinie ist mit Bezugszeichen G gekennzeichnet und verläuft ebenfalls entlang der Längsachse L der Dichtungsbahn 100.

Das Dichtungsband 100 umfaßt in vollflächiger Erstreckung über die erste Bahn 1 und die zweite Bahn 2 einen zweischichtigen Verbund, der aus einer dampfdiffusionsoffenen und flüssigkeitsdichten Trägerbahn 10 und einer hierauf aufkaschierten ebenfalls dampfdiffusionsoffenen und flüssigkeitsdichten Membranfolie 11 gebildet ist.

Im Bereich der ersten streifenförmigen Bahn 1 ist lediglich der vorgenannte zweischichtige Schichtenaufbau aus Trägerbahn 10 und Membranfolie 11 vorhanden, so daß insgesamt die solchermaßen ausgebildete Trägerbahn 1 ebenfalls dampfdiffusionsoffen und flüssigkeitsdicht ausgebildet ist.

Demgegenüber ist im Bereich der zweiten streifenförmigen Bahn 2 zusätzlich auf den vorgenannten Verbund aus Trägerbahn 10 und Membranfolie 11 oberseitig auf die Membranfolie 11, d.h. auf der der Trägerbahn 10 abgewandten Seite noch eine weitere Schicht aus einer dampfdiffusionsdichten und flüssigkeitsdichten Sperrfolie 12 aufgebracht, die demgemäß eine der Ausdehnung der zweiten streifenförmigen Bahn 2 entsprechende Abmessung aufweist. Im Gegensatz zur zweischichtig aufgebauten ersten streifenförmigen Bahn 1 ist mithin die zweite streifenförmige Bahn 2 dreischichtig ausgebildet, sie besteht aus der Trägerbahn 10, darauf aufgebracht der Membranfolie 11 und hierauf aufgebracht der Sperrfolie 12.

Die Sperrfolie 12 ist dampfdiffusionsdicht und flüssigkeitsdicht ausgebildet, was der gesamten zweiten streifenförmigen Bahn 2 die entsprechende Eigenschaft, d.h. Dampfdiffusionsdichtigkeit und Flüssigkeitsdichtigkeit verleiht.

Der genauere Aufbau der ersten und zweiten streifenförmigen Bahn 1, 2 ist auch aus der vergrößerten Darstellung gemäß Figur 2 ersichtlich.

Die in der Darstellung unterste und sich über die gesamte erste streifenförmige Bahn 1 und zweite streifenförmige Bahn 2, d.h. über die Gesamtfläche des Dichtungsbandes 100 erstreckende Trägerbahn 10 ist beispielsweise aus einem Spinnvlies auf Basis von Polypropylen mit einem Flächengewicht von 20 bis 150 g/m² gebildet.

Zur Verbesserung der späteren Putzhaftung kann das Spinnvlies bedarfsweise perforiert ausgebildet sein, z.B. mechanisch oder hydraulisch vernadelt sein.

Bei mechanischer Vernadelung mittels beheizter oder unbeheizter Nadeln werden Perforationen mit einem Durchmesser von 0,5 bis 5 mm und bei hydraulischer Vernadelung mit einem Durchmesser von 0,1 bis 2 mm in regelmäßiger oder unregelmäßiger flächiger Anordnung auf dem Spinnvlies vorgesehen, wobei die einzelnen Abstände der Perforationen bevorzugt etwa 1 - 10 mm betragen. Durch die Perforationen weist das Spinnvlies hohe Oberflächenrauhigkeit auf, die die Putzhaftung wie gewünscht begünstigt.

Auf diese Trägerbahn 10 aufkaschiert ist eine dampfdiffusionsoffene und flüssigkeitsdichte Membranfolie 11 vorgesehen, die beispielsweise ebenfalls auf Basis von Polypropylen in einer Dicke von 20 bis 30 µm und einem Flächengewicht von 20 bis 40 g/m² ausgeführt ist. Diese beiden Schichten 10, 11 bilden einen Verbund, der die erste streifenförmige Bahn 1 ausbildet.

Im Bereich der zweiten streifenförmigen Bahn 2 ist auf die Membranfolie 11 noch eine weitere Schicht in Form einer flüssigkeitsdichten und dampfdiffusionsdichten Sperrfolie 12 aufgebracht, die beispielsweise von einer Aluminiumdünnfolie oder auch von einer metallbedampften Folie z.B. auf Basis von Polypropylen mit einer Dicke von 18 bis 20 µm gebildet sein kann. Im Falle der Ausbildung aus einer Polyolefinfolie mit Metallbedampfung ist die Metallbedampfung vorzugsweise auf der der Membranfolie 11 abgewandten Seite der Sperrfolie 12 angeordnet, um eine einwandfreie Kaschierung zwischen den Folien 11, 12 zu ermöglichen.

Im Bereich der Grenzlinie G zwischen der ersten und der zweiten Bahn 1, 2 ist darüber hinaus auf die Trägerbahn 10 auf der der Membranfolie 11 abgewandten Seite eine Haftkleberschicht 5 aufgebracht, die mittels eines abziehbaren Abdeckbandes 6 z.B. auf Basis eines silikonisierten Papiers während des Nichtgebrauchs abgedeckt ist. Bei der Montage wird das Abdeckband 6 abgezogen und das Dichtungsband 100 mittels der Haftkleberschicht 5 am Rahmen angeklebt. Hierbei wird die Orientierung des Dichtungsbandes 100 so gewählt, daß die dampfdiffusionsoffene und flüssigkeitsdichte erste streifenförmige Bahn 1 zur Außenseite des Bauwerks hinweist, während die dampfdiffusionsdichte und flüssigkeitsdichte zweite streifenförmige Bahn 2 zur Innenseite des Bauwerks hinweist. Die jeweiligen freien Enden, d.h. die der Grenzlinie G abgewandten Längsseitenränder der ersten und zweiten streifenförmigen Bahn 1, 2 können sodann mittels geeigneter z.B. aufsprühbarer Klebemittel am Bauwerk zur vollständigen Abdichtung der Fuge angeklebt werden.

Die Verbindung zwischen der Trägerwand 10 und der aufkaschierten Membranfolie 11 und/oder der im Bereich der zweiten streifenförmigen Bahn 2 noch zusätzlich aufkaschierten Sperrfolie 12 kann z.B. durch ein vor dem Zusammenführen der Lagen aufgestreutes geeignetes Polymerpulver, wie EVA in an sich bekannter Weise bewirkt werden.

Es ist demzufolge ersichtlich, daß das Dichtungsband 100 einen Basisverbund aus einer Trägerbahn 10 und einer Membranfolie 11 aufweist, welcher flüssigkeitsdicht und dampfdiffusionsoffen ausgeführt ist und vollständig die erste streifenförmige Bahn sowie als Komponente die zweite streifenförmige Bahn 2 bildet, zusätzlich wird im Falle der zweiten streifenförmigen Bahn 2 noch die dampfdiffusionsdichte und flüssigkeitsdichte Sperrfolie 12 aufgebracht, wodurch die unterschiedlichen Eigenschaften der ersten streifenförmigen Bahn 1 mit zwei Schichten und der zweiten streifenförmigen Bahn 2 mit drei Schichten erzielt werden.

Die Herstellung eines solchen Dichtungsbandes 100 ist schematisch in der Figur 4 dargestellt.

Mit Bezugszeichen 3 ist eine an sich bekannte Flachbettkaschieranlage bezeichnet, die über zwei zwischen nicht näher bezeichneten Umlenkrollen umlaufende Förderbänder 30, 31 verfügt, zwischen denen ein langgestreckter Spalt S ausgebildet ist. Von Vorratsrollen werden die die Trägerbahn 10 ausbildende Lage z.B. aus einem ggf. genadelten Spinnvlies und die die Membranfolie 11 ausbildende Folie der Flachbettkaschiereinrichtung 3 zugeführt und vor Eintritt in den langgestreckten Spalt S in der gewünschten Reihenfolge aufeinander gelegt.

Alternativ kann auch eine Bahn aus vorab bereits haftfest miteinander verbundener Trägerbahn 10 und Membranfolie 11 zugeführt werden.

Darüber hinaus wird bereichsweise, nämlich in den Bereichen, in welchen die zweite streifenförmige Bahn 2 ausgebildet werden soll, zusätzlich noch die Sperrfolie 12 zugeführt und auf die Membranfolie 11 vor dem Eintritt in den langgestreckten Spalt S der Flachbettkaschiereinrichtung 3 aufgelegt. Gegebenenfalls wird zwischen die einzelnen Schichten noch ein Haftvermittler, beispielsweise EVA eingebracht, z.B. durch Aufstreuen.

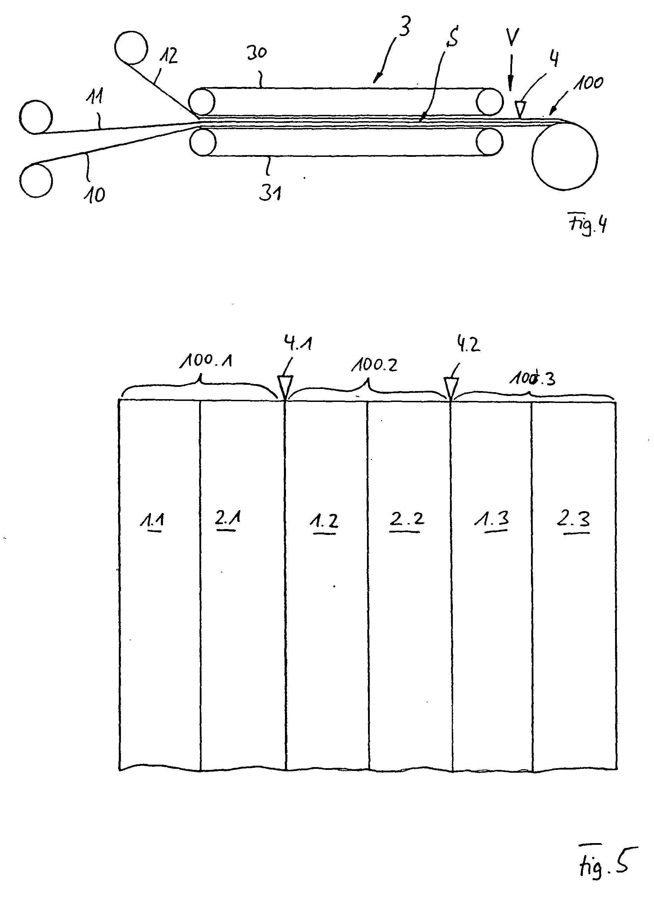

Nachfolgend werden die zwei bzw. bereichsweise drei Schichten 10, 11 bzw. 10, 11, 12 im langgestreckten Spalt S der Flachbettkaschiereinrichtung 3 unter zwangsweise Förderung der umlaufenden Förderbänder 30, 31 durch Einwirkung von Wärme und Druck in an sich bekannter Weise zu einem Verbund verbunden, welcher aus der Aufsicht gemäß Figur 5 ersichtlich ist.

Man erkennt, daß zur besonders rationellen Fertigung der Verbund aus Trägerbahn 10 und Membranfolie 11 gegenüber dem in der Figur 1 dargestellten fertigen Dichtungsband 100 deutlich breiter ausgeführt ist und daß mehrere, hier drei streifenförmige Sperrfolien 12 voneinander beabstandet zur Ausbildung je eines zweiten streifenförmigen Bereiches 2.1, 2.2, 2.3 zugeführt worden sind. Dieser Abstand zwischen den Sperrfolien 12 entspricht der gewünschten Breite der ersten streifenförmigen Bahn 1. Die von der jeweiligen Sperrfolie 12 nicht überdeckten Bereiche umfassen lediglich die Trägerbahn 10 und die Membranfolie 11 und bilden demgemäß erste streifenförmige Bereiche 1.1, 1.2, 1.3 aus. Benachbart hierzu werden entsprechend jeweils zweite streifenförmige Bereiche 2.1, 2.2, 2.3 ausgebildet, in denen die zugeführten Sperrfolien 12 auf die Membranfolie 11 aufkaschiert sind.

Sodann können diese Bereiche nach dem Austritt aus der Flachbettkaschiereinrichtung 3 mittels Schneideinrichtung 4 bzw. 4.1, 4.2 in der Darstellung gemäß Figur 5 in hier drei streifenförmige Dichtungsbänder 100.1, 100.2, 100.3 zerschnitten werden, die sodann jeweils erste und zweite streifenförmige Bahnen 1.1, 2.1, 1.2, 2.2, 1.3, 2.3 gemäß der Darstellung in Figur 1 aufweisen.

Auf diese Weise ist eine hoch rationelle Fertigung der Dichtungsbänder mit niedrigen Kosten ermöglicht.

Vor oder nach dem Durchlaufen der Flachbettkaschiereinrichtung 3 werden zudem noch die in der Figur 1 ersichtlichen Haftkleberschichten 5 und Abdeckbänder 6 angebracht, so daß die Herstellung der Dichtungsbänder 100 gemäß Darstellung in Figur 1 abgeschlossen ist.

Neben der vorangehend geschilderten Ausbildung der Trägerbahn 10 der ersten und zweiten streifenförmigen Bahn 1, 2 aus einem Spinnvlies z.B. auf Basis von Polypropylen ist es auch möglich, die Trägerbahn 10 aus einer dreidimensional geprägten und gelochten Folie, z.B. einer Polyolefinfolie auf Basis von Polyethylen oder Polypropylen oder auch eines Polyesters in einer Dicke von 30 bis 80 µm auszubilden. Diese schematisch in der Figur 3 ersichtliche dreidimensional geprägte und gelochte Folie weist konusförmige Trichter 102 auf, die rastermäßig angeordnet und gleichsam auf einer Seite der Folie bzw. der daraus gefertigten Trägerbahn 10 vorstehen. An ihrem verjüngten Ende weisen die konusförmigen Trichter 102 jeweils ein Loch 101 auf, was der solchermaßen ausgebildeten Trägerbahn 10 dampfdiffusionsoffene, aber flüssigkeitsdichte Eigenschaften verleiht, die zusammen mit der dampfdiffusionsoffenen aufkaschierten Membranfolie 11 bei der streifenförmigen Bahn 1 die gewünschte Dampfdiffusionsoffenheit sicherstellt bzw. im Zusammenwirken mit der entlang der streifenförmigen Bahn 2 zusätzlich noch aufgebrachten Sperrfolie 12 dieser streifenförmigen Bahn 2 die gewünschte Dampfdiffusionsdichtigkeit verleiht.

Die mit den Löchern 101 versehene Oberfläche 104 der die Trägerbahn 10 bildenden Folie ist infolge der Ausprägung der konusförmigen Trichter 102 dreidimensional stark strukturiert und bietet eine gute Verkrallung z.B. zu einer am Mauerwerk angebrachten Putzschicht, so daß die die Löcher 101 aufweisende Oberfläche 104 auf der der aufkaschierten Membranfolie 11 abgewandten Seite der Trägerbahn 10 ausgebildet ist. Demgegenüber ist die gegenüberliegende Oberfläche 103 wesentlich glatter ausgebildet und gewährleistet eine gute Kaschierbarkeit zur Membranfolie 11.

Unabhängig von der Ausbildung der Trägerbahn 10 ist eine sehr rationelle und mit einfachen Mitteln zu bewerkstelligende Herstellung des Dichtungsbandes 100 ermöglicht, da die Unterscheidung zwischen der ersten dampfdiffusionsoffenen und flüssigkeitsdichten streifenförmigen Bahn 1 und der zweiten dampfdiffusionsdichten und flüssigkeitsdichten streifenförmigen Bahn 2 allein durch die zusätzliche Aufbringung der Sperrfolie 12 auf den an sich dampfdiffusionsoffenen und flüssigkeitsdichten Verbund aus Trägerbahn 10 und Membranfolie 11 erfolgt.

## Patentansprüche

1. Dichtungsband zum Abdichten einer Fuge zwischen einem in ein Bauwerk eingesetzten Rahmen und dem Bauwerk, wobei das Dichtungsband (100) zwei parallel zueinander verlaufende und aneinander angrenzende streifenförmige Bahnen (1, 2) umfaßt und die erste streifenförmige Bahn (1) dampfdiffusionsoffen und flüssigkeitsdicht und die zweite streifenförmige Bahn (2) dampfdiffusionsdicht und flüssigkeitsdicht ausgebildet ist, **dadurch gekennzeichnet, daß** das Dichtungsband (100) einen sich vollflächig über die erste und zweite Bahn (1, 2) erstreckenden Verbund aus einer dampfdiffusionsoffenen und flüssigkeitsdichten Trägerbahn (10) auf Polymerbasis sowie einer auf die Trägerbahn (10) aufkaschierten dampfdiffusionsoffenen und flüssigkeitsdichten Membranfolie (11) umfaßt und im Bereich der zweiten streifenförmigen Bahn (2) auf die Membranfolie (11) eine dampfdiffusionsdichte und flüssigkeitsdichte Sperrfolie (12) aufgebracht ist.

2. Dichtungsband nach Anspruch 1, **dadurch gekennzeichnet, daß** die Trägerbahn (10) von einem Vlies auf Basis von Polypropylen, Polyethylen oder eines Polyesters mit einem Flächengewicht von 20 bis 150 g/m² gebildet ist.

3. Dichtungsband nach Anspruch 1 oder 2, **dadurch gekennzeichnet, daß** die Trägerbahn (10) aus einem Vlies aus schmelzgeblasenen Mikrofasern oder aus Endlosfilamenten gebildet ist.

4. Dichtungsband nach einem der Ansprüche 2 oder 3, **dadurch gekennzeichnet, daß** das Vlies perforiert ist.

5. Dichtungsband nach Anspruch 4, **dadurch gekennzeichnet, daß** das Vlies mittels Nadelung perforiert ist und in regelmäßiger oder unregelmäßiger Anordnung Perforationen mit einem Durchmesser von 0,5 bis 5 mm aufweist.

6. Dichtungsband nach Anspruch 4, **dadurch gekennzeichnet, daß** das Vlies mittels Wasserstrahlverfestigung perforiert ist und in regelmäßiger oder unregelmäßiger Anordnung Perforationen mit einem Durchmesser von 0,1 bis 2 mm aufweist.

7. Dichtungsband nach einem der Ansprüche 4 bis 6, **dadurch gekennzeichnet, daß** die einzelnen Perforationen des Vlieses einen Abstand von 1 - 10 mm voneinander aufweisen.

8. Dichtungsband nach Anspruch 1, **dadurch gekennzeichnet, daß** die Trägerbahn (10) von einer dreidimensional geprägten und gelochten Folie auf Basis von Polypropylen, Polyethylen oder eines Polyesters in einer Dicke von 30 bis 80 µm gebildet ist, wobei durch die Prägung konusförmige Trichter (102) ausgebildet sind, die an ihrem verjüngten Ende ein Loch (101) aufweisen und eine mit Löchern versehene Oberfläche (104) bilden, welche auf der der aufkaschierten Membranfolie (11) abgewandten Seite der Trägerbahn (10) ausgebildet ist.

9. Dichtungsband nach einem der Ansprüche 1 bis 8, **dadurch gekennzeichnet, daß** die Membranfolie (11) auf Basis von Polypropylen, Polyethylen oder eines Polyesters in einer Dicke von 20 bis 30 µm und einem Flächengewicht von 20 bis 40 g/m² gebildet ist.

10. Dichtungsband nach einem der Ansprüche 1 bis 9, **dadurch gekennzeichnet, daß** die Sperrfolie (12) auf Basis von Polypropylen, Polyethylen oder eines Polyesters in einer Dicke von 18 bis 20 µm und einer Metallbedampfung auf der der Membranfolie (11) abgewandten Seite ausgebildet ist.

11. Dichtungsband nach einem der Ansprüche 1 bis 9, **dadurch gekennzeichnet, daß** die Sperrfolie (12) von einer Aluminium-Dünnfolie gebildet ist.

12. Dichtungsband nach einem der Ansprüche 1 bis 9, **dadurch gekennzeichnet, daß** die Sperrfolie (12) aus einer flüssigkeitsdichten Folie auf Basis von Polyolefinen oder eines Polyesters gebildet ist.

13. Dichtungsband nach einem der Ansprüche 1 bis 12, **dadurch gekennzeichnet, daß** die Trägerbahn (10), die Membranfolie (11) und die Sperrfolie (12), soweit sie auf Basis thermoplastischer Kunststoffe ausgebildet sind, aus gleichen oder miteinander kompatiblen und durch Kaschieren haftfest miteinander verbindbaren Kunststoffen ausgebildet sind.

14. Dichtungsband nach einem der Ansprüche 1 bis 13, **dadurch gekennzeichnet, daß** entlang der Grenzlinie (G) zwischen der ersten und zweiten Bahn (1, 2) eine Haftkleberschicht (5) mit einem abziehbaren Abdeckband (6) für eine Verklebung des Dichtungsbandes (100) am Bauteil aufgebracht ist.

15. Dichtungsband nach Anspruch 14, **dadurch gekennzeichnet, daß** die Haftkleberschicht (5) auf der der Sperrfolie (12) abgewandten Oberfläche des Dichtungsbandes (100) aufgebracht ist.

16. Dichtungsband nach einem der Ansprüche 14 oder 15, **dadurch gekennzeichnet, daß** für die Haftkleberschicht (5) ein Haftkleber mit einem Anwendungstemperaturbereich von -30°C bis +80°C verwendet ist.

17. Verfahren zur Herstellung eines Dichtungsbandes, welches zwei parallel zueinander verlaufende und aneinander angrenzende streifenförmige Bahnen (1, 2) umfaßt, wobei die erste streifenförmige Bahn (1) dampfdiffusionsoffen und flüssigkeitsdicht und die zweite streifenförmige Bahn (2) dampfdiffusionsdicht und flüssigkeitsdicht ausgebildet ist, **dadurch gekennzeichnet, daß** ein sich mindestens über die gesamte Breite des Dichtungsbandes (100) erstreckender Verbund aus einer dampfdiffusionsoffenen und flüssigkeitsdichten Trägerbahn (10) auf Polymerbasis sowie einer auf die Trägerbahn (10) aufgebrachten dampfdiffusionsoffenen und flüssigkeitsdichten Membranfolie (11) und eine sich über die Breite der zweiten streifenförmigen Bahn (2) erstreckende dampfdiffusionsdichte und flüssigkeitsdichte Sperrfolie (12) gemeinsam einer Kaschiereinrichtung zugeführt werden, wobei die Sperrfolie (12) im Bereich der auszubildenden zweiten streifenförmigen Bahn (2) auf die Membranfolie (11) des Verbundes aufgelegt wird und dann der Verbund und die Sperrfolie (12) gemeinsam in der Kaschiereinrichtung unter Einwirkung von Druck und Wärme zu dem Dichtungsband unter Ausbildung der ersten und zweiten streifenförmigen Bahnen (1, 2) verbunden wird.

18. Verfahren nach Anspruch 16, **dadurch gekennzeichnet, daß** die Trägerbahn (10) und die Membranfolie (11) vor dem Durchtritt durch die Kaschiereinrichtung einzeln zugeführt und aufeinandergelegt werden und beim Durchtritt durch die Kaschiereinrichtung haftfest miteinander verbunden werden.

19. Verfahren nach einem der Ansprüche 16 oder 17, **dadurch gekennzeichnet, daß** der Verbund aus Trägerbahn (10) und Membranfolie (11) ein Vielfaches der Breite des Dichtungsbandes (100) aufweist und mehrere Sperrfolien (12) in einem der Breite der ersten streifenförmigen Bahn (1) entsprechenden Abstand voneinander auf den Verbund aufgelegt und gemeinsam mit diesem durch die Kaschiereinrichtung geführt werden und nachfolgend die aus der Kaschiereinrichtung austretende Bahn in Dichtungsbänder (100) mit ersten und zweiten streifenförmigen Bahnen (1, 2) geschnitten wird.

20. Verfahren nach einem der Ansprüche 16 bis 18, **dadurch gekennzeichnet, daß** die Kaschiereinrichtung einen zwischen oberseitigen und unterseitigen umlaufenden Förderbändern ausgebildeten langgestreckten Spalt für den Durchtritt des Verbundes und der Sperrfolie (12) aufweist.

21. Verfahren nach einem der Ansprüche 16 bis 19, **dadurch gekennzeichnet, daß** vor dem Eintritt in die Kaschiereinrichtung zwischen die Trägerbahn (10) und die Membranfolie (11) und/oder zwischen die Membranfolie (11) und die Sperrfolie (12) ein Haftvermittler eingebracht wird.

22. Verfahren nach einem der Ansprüche 16 bis 20, **dadurch gekennzeichnet, daß** nach dem Durchtritt durch die Kaschiereinrichtung in streifenförmigen Bereichen des Dichtungsbandes (100) Haftkleberschichten (5) und Abdeckbänder (6) auf dieses aufgebracht werden.

## Claims

1. A sealing strip for sealing a joint between a frame inserted into a building and the building, the sealing strip (100) comprising two strip-shaped webs (1, 2) extending parallel to one another and adjoining one another and the first strip-shaped web (1) being of vapour-diffusion-permeable and liquid-tight design and the second strip-shaped web (2) being of vapour-diffusion-tight and liquid-tight design, **characterized in that** the sealing strip (100) comprises a composite, extending over the full extent of the first and second webs (1, 2), of a vapour-diffusion-permeable and liquid-tight carrier web (10) on a polymer basis and a vapour-diffusion-permeable and liquid-tight membrane film (11) laminated onto the carrier web (10), and a vapour-diffusion-tight and liquid-tight barrier film (12) is applied to the membrane film (11) in the region of the second strip-shaped web (2).

2. A sealing strip according to claim 1, **characterized in that** the carrier web (10) is formed from a non-woven on a basis of polypropylene, polyethylene or a polyester with a weight per unit area of 20 to 150 g/m².

3. A sealing strip according to claim 1 or 2, **characterized in that** the carrier web (10) is formed from a non-woven consisting of melt-blown microfibres or of endless filaments.

4. A sealing strip according to either of claims 2 and 3, **characterized in that** the non-woven is perforated.

5. A sealing strip according to claim 4, **characterized in that** the non-woven is perforated by means of needling and has perforations with a diameter of 0.5 to 5 mm in a regular or irregular arrangement.

6. A sealing strip according to claim 4, **characterized in that** the non-woven is perforated by means of water-jet consolidation and has perforations with a diameter of 0.1 to 2 mm in a regular or irregular arrangement.

7. A sealing strip according to any one of claims 4 to 6, **characterized in that** the individual perforations of this non-woven have a distance of 1-10 mm from one another.

8. A sealing strip according to claim 1, **characterized in that** the carrier web (10) is formed from a three-dimensionally stamped and perforated film on a basis of polypropylene, polyethylene or a polyester with a thickness of 30 to 80 µm, cone-shaped funnels (102) being formed by the stamping which have a hole (101) at their tapered end and form a surface (104) provided with holes which is provided on that side of the carrier web (10) facing away from the laminated-on membrane film (11).

9. A sealing strip according to any one of claims 1 to 8, **characterized in that** the membrane film (11) is formed on a basis of polypropylene, polyethylene or a polyester with a thickness of 20 to 30 µm and a weight per unit area of 20 to 40 g/m².

10. A sealing strip according to any one of claims 1 to 9, **characterized in that** the barrier film (12) is formed on a basis of polypropylene, polyethylene or a polyester with a thickness of 18 to 20 µm and metallizing on the side facing away from the membrane film (11).

11. A sealing strip according to any one of claims 1 to 9, **characterized in that** the barrier film (12) is formed from an aluminium thin film.

12. A sealing strip according to any one of claims 1 to 9, **characterized in that** the barrier film (12) is formed from a liquid-tight film on a basis of polyolefins or a polyester.

13. A sealing strip according to any one of claims 1 to 12, **characterized in that** the carrier web (10), the membrane film (11) and the barrier film (12), insofar as they are formed on a basis of thermoplastic plastic materials, are formed from the same or mutually compatible plastics which can be interconnected in a firmly bonded manner by laminating.

14. A sealing strip according to any one of claims 1 to 13, **characterized in that** an adhesive layer (5) with a pull-off covering strip (6) for sticking the sealing strip (100) to the component is applied along the boundary line (G) between the first and second webs (1, 2).

15. A sealing strip according to claim 14, **characterized in that** the adhesive layer (5) is applied to that surface of the sealing strip (100) facing away from the barrier film (12).

16. A sealing strip according to either of claims 14 and 15, **characterized in that** an adhesive with an application temperature range of -30°C to +80°C is used for the adhesive layer (5).

17. A method for producing a sealing strip, which comprises two strip-shaped webs (1, 2) extending parallel to one another and adjoining one another, the first strip-shaped web (1) being of vapour-diffusion-permeable and liquid-tight design and the second strip-shaped web (2) being of vapour-diffusion-tight and liquid-tight design, **characterized in that** a composite, extending at least over the entire width of the sealing strip (100), of a vapour-diffusion-permeable and liquid-tight carrier web (10) on a polymer basis and of a vapour-diffusion-permeable and liquid-tight membrane film (11) applied to the carrier web (10) and a vapour diffusion-tight and liquid-tight barrier film (12) extending over the width of the second strip-shaped web (2) are together fed to a laminating arrangement, the barrier film (12) being placed onto the membrane film (11) of the composite in the region of the second strip-shaped web (2) to be formed and then the composite and the barrier film (12) being connected together in the laminating arrangement under the action of pressure and heat to provide the sealing strip while forming the first and second strip-shaped webs (1, 2).

18. A method according to claim 17, **characterized in that** the carrier web (10) and the membrane film (11) are fed individually and placed one on the other before passage through the laminating arrangement and are interconnected in a firmly bonded manner on passage through the laminating arrangement.

19. A method according to either of claims 16 and 17, **characterized in that** the composite of carrier web (10) and membrane film (11) has a width that is a multiple of the width of the sealing strip (100) and a number of barrier films (12) are placed onto the composite at a distance from one another corresponding to the width of the first strip-shaped web (1) and are, together with this, guided through the laminating arrangement and subsequently the web emerging from the laminating arrangement is cut into sealing strips (100) with first and second strip-shaped webs (1, 2).

20. A method according to any one of claims 16 to 18, **characterized in that** the laminating arrangement has an elongate gap for passage of the composite and the barrier film (12) formed between an upper-side and a lower-side rotating conveyor belt.

21. A method according to any one of claims 16 to 19, **characterized in that** a bonding agent is introduced between the carrier web (10) and the membrane film (11) and/or between the membrane film (11) and the barrier film (12) before entry into the laminating arrangement.

22. A method according to any one of claims 16 to 20, **characterized in that** adhesive layers (5) and covering strips (6) are applied to the sealing strip (100) in strip-shaped regions thereof after passage through the laminating arrangement.

## Revendications

1. Bande d'étanchéité pour étancher un joint entre un cadre inséré dans une construction et la construction, la bande d'étanchéité (100) comprenant deux nappes (1, 2) en forme de ruban s'étendant parallèlement entre elles et adjacentes l'une à l'autre et la première nappe (1) en forme de ruban étant configurée de manière ouverte à la diffusion de vapeur et étanche aux liquides et la deuxième nappe (2) en forme de ruban étant configurée de manière étanche à la diffusion de vapeur et étanche aux liquides, **caractérisée en ce que** la bande d'étanchéité (100) comprend un composite s'étendant sur toute la surface de la première et la deuxième nappe (1, 2), composé d'une nappe de support (10) ouverte à la diffusion de vapeur et étanche aux liquides à base de polymère ainsi que d'une pellicule membraneuse (11) ouverte à la diffusion de vapeur et étanche aux liquides contrecollée sur la nappe de support (10) et une pellicule isolante (12) étanche à la diffusion de vapeur et étanche aux liquides est appliquée sur la pellicule membraneuse (11) dans la région de la deuxième nappe (2) en forme de ruban.

2. Bande d'étanchéité selon la revendication 1, **caractérisée en ce que** la nappe de support (10) est formée par un voile à base de polypropylène, polyéthylène ou d'un polyester ayant un poids surfacique de 20 à 150 g/m².

3. Bande d'étanchéité selon la revendication 1 ou 2, **caractérisée en ce que** la nappe de support (10) est formée d'un voile composé de microfibres extrudées soufflées ou de filaments sans fin.

4. Bande d'étanchéité selon la revendication 2 ou 3, **caractérisée en ce que** le voile est perforé.

5. Bande d'étanchéité selon la revendication 4,
**caractérisée en ce que** le voile est perforé par aiguilletage et présente en disposition régulière ou irrégulière des perforations ayant un diamètre de 0,5 à 5 mm.

6. Bande d'étanchéité selon la revendication 4, **caractérisée en ce que** le voile est perforé par consolidation par jets d'eau et présenté en disposition régulière ou irrégulière des perforations ayant un diamètre de 0,1 à 2 mm.

7. Bande d'étanchéité selon l'une des revendications 4 à 6, **caractérisée en ce que** les perforations individuelles du voile présente un écartement de 1 - 10 mm les unes par rapport aux autres.

8. Bande d'étanchéité selon la revendication 1, **caractérisée en ce que** la nappe de support (10) est formée par une pellicule gaufrée en trois dimensions et perforée, à base de polypropylène, polyéthylène ou d'un polyester d'une épaisseur de 30 à 80 µm, des entonnoirs (102) en forme de cône étant formés par le gaufrage, lesquels présentent à leur extrémité rétrécie un trou (101) et forment une surface (104) pourvue de trous qui est configurée sur le côté de la nappe de support (10) opposé à la pellicule membraneuse contrecollée (11).

9. Bande d'étanchéité selon l'une des revendications 1 à 8, **caractérisée en ce que** la pellicule membraneuse (11) est formée à base de polypropylène, polyéthylène ou d'un polyester en une épaisseur de 20 à 30 µm et un poids surfacique de 20 à 40 g / m².

10. Bande d'étanchéité selon l'une des revendications 1 à 9, **caractérisée en ce que** la pellicule isolante (12) est formée à base de polypropylène, polyéthylène ou d'un polyester en une épaisseur de 18 à 20 µm et d'une vaporisation métallique sur le côté opposé à la pellicule membraneuse (11).

11. Bande d'étanchéité selon l'une des revendications 1 à 9, **caractérisée en ce que** la pellicule isolante (12) est formée par une mince pellicule d'aluminium.

12. Bande d'étanchéité selon l'une des revendications 1 à 9, **caractérisée en ce que** la pellicule isolante (12) est formée d'une pellicule étanche aux liquides à base de polyoléfines ou d'un polyester.

13. Bande d'étanchéité selon l'une des revendications 1 à 12, **caractérisée en ce que** la nappe de support (10), la pellicule membraneuse (11) et la pellicule isolante (12), dans la mesure où elles sont configurées à base de matières synthétiques thermoplastiques, sont configurées à partir de matières synthétiques identiques ou compatibles entre elles et reliables entre elles de manière adhérente par contrecollage.

14. Bande d'étanchéité selon l'une des revendications 1 à 13, **caractérisée en ce que** le long de la ligne de démarcation (G) entre la première et la deuxième nappe (1, 2), une couche d'adhésif (5) avec une bande de recouvrement enlevable (6) est appliquée sur l'élément de construction pour un collage de la bande d'étanchéité (100).

15. Bande d'étanchéité selon la revendication 14, **caractérisée en ce que** la couche d'adhésif (5) est appliquée sur la surface de la bande d'étanchéité (100) opposée à la pellicule isolante (12).

16. Bande d'étanchéité selon l'une des revendications 14 ou 15, **caractérisée en ce qu'**on utilise pour la couche d'adhésif (5) un adhésif avec une plage de température d'utilisation de -30° C à +80° C.

17. Procédé pour fabriquer une bande d'étanchéité qui comprend deux nappes (1, 2) en forme de ruban s'étendant parallèlement entre elles et adjacentes l'une à l'autre, la première nappe (1) en forme de ruban étant configurée de manière ouverte à la diffusion de vapeur et étanche aux liquides et la deuxième nappe (2) en forme de ruban étant configurée de manière étanche à la diffusion de vapeur et étanche aux liquides, **caractérisé en ce qu'**un composite s'étendant sur toute la largeur de la bande d'étanchéité (100), composé d'une nappe de support (10) à base de polymère, ouverte à la diffusion de vapeur et étanche aux liquides, ainsi que d'une pellicule membraneuse (11) ouverte à la diffusion de vapeur et étanche aux liquides appliquée sur la nappe de support (10) et une pellicule isolante (12) étanche à la diffusion de vapeur et étanche aux liquides, s'étendant sur la largeur de la deuxième nappe (2), sont amenés ensemble jusqu'à un dispositif de contrecollage, la pellicule isolante (12) étant placée sur la pellicule membraneuse du composite dans la région de la deuxième nappe (2) en forme de ruban à configurer et le composite et la pellicule isolante (12) étant alors reliés ensemble dans le dispositif de contrecollage sous l'action de pression et de chaleur en une bande d'étanchéité en configurant les première et deuxième nappes (1, 2) en forme de ruban.

18. Procédé selon la revendication 16, **caractérisé en ce que** la nappe de support (10) et la pellicule membraneuse (11) sont amenées individuellement avant le passage par le dispositif de contrecollage et sont placées l'une sur l'autre et sont reliées ensemble de manière adhérente lors du passage à travers le dispositif de contrecollage.

19. Procédé selon l'une des revendications 16 ou 17, **caractérisé en ce que** le composite composé de la nappe de support (10) et de la pellicule membraneuse (11) présente un multiple de la largeur de la bande d'étanchéité (100) et plusieurs pellicules isolantes (12) sont placées à une distance les unes des autres correspondant à la largeur de la première nappe (1) en forme de ruban sur le composite et sont guidées avec celui-ci à travers le dispositif de contrecollage et, par la suite, la nappe sortant du dispositif de contrecollage est coupée en bandes d'étanchéité (100) avec des première et deuxième nappes (1, 2) en forme de ruban.

20. Procédé selon l'une des revendications 16 à 18, **caractérisé en ce que** le dispositif de contrecollage présenté une fente allongée configurée entre des bandes transporteuses supérieure et inférieure en révolution pour le passage du composite et de la pellicule isolante (12).

21. Procédé selon l'une des revendications 16 à 19, **caractérisé en ce qu'**avant l'entrée dans le dispositif de contrecollage, un agent adhésif est inséré entre la nappe de support (10) et la pelliculé membraneuse (11) et/ou entre la pellicule membraneuse (11) et la pellicule isolante (12).

22. Procédé selon l'une des revendications 16 à 20, **caractérisé en ce qu'**après le passage à travers le dispositif de contrecollage, des couches d'adhésif (5) et des bandes de recouvrement (6) sont appliquées sur la bande d'étanchéité (100) dans des régions en forme de ruban de celle-ci.
